# EUROPEAN PATENT APPLICATION

(11) **EP 4 709 039 A1**
(43) Date of publication of application: **11.03.2026**
(21) Application number: 24905393.5
(22) Date of filing: 29.04.2024
(51) Int. Cl.: H05B 3/14, H05B 3/34, C01B 32/184

(54) **HEATING FILM AND PREPARATION METHOD THEREFOR, HEATING ELEMENT AND ELECTRIC HEATING APPLIANCE**

(30) Priority: 18.12.2023 CN 202311750752
(71) Applicant: Guangdong Midea Kitchen Appliances Manufacturing Co., Ltd., Foshan, Guangdong 528311 (CN)
(72) Inventor: ZHANG, Zehui, Foshan, Guangdong 528311 (CN); WANG, Xingzhong, Foshan, Guangdong 528311 (CN); RAO, Jie, Foshan, Guangdong 528311 (CN); SUN, Yanjun, Foshan, Guangdong 528311 (CN); TANG, Xiangwei, Foshan, Guangdong 528311 (CN)
(74) Representative: RGTH
(86) International application number: PCT/CN2024/090681
(87) International publication number: WO 2025/129889

(57) **Abstract**

Provided are a heating film, a method for preparing the heating film, a heating element, and a heating appliance. The heating film includes graphene and an auxiliary agent. The auxiliary agent includes at least one of a reinforcing agent, a warming agent, and a spectral modifier. The reinforcing agent includes at least one of aqueous ammonia, glucose, ethylene glycol, ethylenediamine, carboxymethylcellulose, polyvinyl alcohol, polyethylene glycol, and chitin. The warming agent includes at least one of carbon nanotubes, fullerene, carbon black, and graphene nanoplatelets. The spectral modifier includes at least one of silicon carbide, boron nitride, and silicon nitride.

## Description

### CROSS-REFERENCE TO RELATED APPLICATION

This application claims priority to and benefits of Chinese patent application No. 2023117507525, filed on December 18, 2023, the entire content of which is incorporated herein by reference.

### FIELD

The present disclosure relates to the technical field of electric appliance, and more particularly, to a heating film, a method for preparing the heating film, a heating element, and a heating appliance.

### BACKGROUND

Conventional electric ovens heat the food mainly through heating the air in a chamber by heating elements, and heat a surface of the food directly through heat radiation. At present, main heating components used in heating appliances existing on the market, such as electric ovens, microwave ovens, and combi steam ovens, comprise heating tubes such as metallic heating tubes (having a highest heating temperature range between 550°C and 750°C),quartz heating tubes (a heating wire of which has a heating temperature ranging from 660°C to 800°C), halogen heating tubes (having a highest heating temperature smaller than 1,000°C), carbon fiber heating tubes (having a highest heating temperature smaller than 1,000°C). However, the above heating elements face problems such as small proportion of radiation heating in a heating temperature range, long temperature rise time in a heating region, low heating efficiency, and inability to efficiently concentrate energy. Therefore, the heating tube has deficiencies such as low heating efficiency, slow temperature rise speed, inadequate temperature, and insufficient heat generation, which may prolong cooking time. Thus, the effect of crispy outside and tender inside of the food can hardly be reached during the heating, thereby resulting in unsatisfactory user experience.

### SUMMARY

The present disclosure aims to solve at least one of the technical problems in the related art to some extent. To this end, an objective of the present disclosure is to provide a heating film. The heating film has a relatively high heating temperature, thereby effectively increasing a heating temperature of a heating element using the heating film.

In an aspect, the present disclosure provides a heating film. According to embodiments of the present disclosure, the heating film comprises graphene and an auxiliary agent. The auxiliary agent comprises at least one of a reinforcing agent, a warming agent, and a spectral modifier. The reinforcing agent comprises at least one of aqueous ammonia, glucose, ethylene glycol, ethylenediamine, carboxymethylcellulose, polyvinyl alcohol, polyethylene glycol, and chitin. The warming agent comprises at least one of carbon nanotubes, fullerene, carbon black, and graphene nanoplatelets. The spectral modifier comprises at least one of silicon carbide, boron nitride, and silicon nitride. Since the graphene is used as a heating material of the heating film, the heating film can have a high heating temperature, a high temperature rise speed, and a high emission coefficient. In addition, both the graphene and the heating film have a sheet-like structure. Thus, when the heating film generates heat, the heat is mainly radiated out in a vertical direction of a heat generation surface, which provides strong directivity and relatively concentrated radiation heat. Therefore, a heating efficiency can be well enhanced.

According to an embodiment of the present disclosure, the heating film satisfies at least one of the following conditions that: the heating film is the graphene; or based on a total mass of the heating film, the heating film comprises 95% to 99.95% by mass of the graphene and 0.05% to 5% by mass of the reinforcing agent; or based on the total mass of the heating film, the heating film comprises 70% to 80% by mass of the graphene and 20% to 30% by mass of the warming agent; or based on the total mass of the heating film, the heating film comprises 90% to 99% by mass of the graphene and 1% to 10% by mass of the spectral modifier; or based on the total mass of the heating film, the heating film comprises 70% to 80% by mass of the graphene, 0.05% to 5% by mass of the reinforcing agent, and 20% to 30% by mass of the warming agent; or based on the total mass of the heating film, the heating film comprises 80% to 89% by mass of the graphene, 0.05% to 5% by mass of the reinforcing agent, and 1% to 10% by mass of the spectral modifier; or based on the total mass of the heating film, the heating film comprises 70% to 80% by mass of the graphene, 20% to 30% by mass of the warming agent, and 1% to 10% by mass of the spectral modifier; or based on the total mass of the heating film, the heating film comprises 70% to 80% by mass of the graphene, 0.05% to 5% by mass of the reinforcing agent, 20% to 30% by mass of the warming agent, and 1% to 10% by mass of the spectral modifier.

According to an embodiment of the present disclosure, the heating film has a maximum heating temperature ranging from 500°C to 1,700°C.

According to an embodiment of the present disclosure, the heating film has an emission wavelength ranging from 3 µm to 15 µm.

According to an embodiment of the present disclosure, the heating film has a thickness ranging from 20 µm to 1,000 µm.

According to an embodiment of the present disclosure, the heating film comprises a plurality of heating units sequentially arranged in a length direction; and adjacent heating units are arranged at an interval from each other and connected through a connection segment.

According to some embodiments of the present disclosure, the heating unit has an outer peripheral wall formed in an oblong shape or a polygonal shape.

According to an embodiment of the present disclosure, each of the plurality of heating units has a hollowed-out hole.

According to an embodiment of the present disclosure, the heating film has a first heating segment and a second heating segment that are adjacent to each other in the length direction, the first heating segment comprises multiple heating units connected to each other, and the second heating segment comprises multiple heating units adjacent to each other, the multiple heating units corresponding to the first heating segment having a smaller size than the multiple heating units corresponding to the second heating segment; and/or the first heating segment and the second heating segment are offset from each other in a width direction of the heating film.

According to an embodiment of the present disclosure, the heating film has a plurality of notches arranged at an interval in the length direction.

According to an embodiment of the present disclosure, each of the plurality of notches is defined through separating a part of the heating film from the remaining part of the heating film and then bending the part of the heating film.

In another aspect, the present disclosure provides a method for preparing the heating film described above. According to embodiments of the present disclosure, the method for preparing the heating film comprises: uniformly dispersing graphene oxide and the auxiliary agent in a solvent to obtain a dispersion, the auxiliary agent comprising at least one of the reinforcing agent, the warming agent, and the spectral modifier; obtaining a graphene oxide film layer by coating the dispersion and drying; sequentially performing low temperature treatment, carbonization treatment, and graphitization treatment on the graphene oxide film layer to obtain a graphene film layer; and performing calendering and cutting on the graphene film layer to obtain the heating film. In this way, with the above method for preparing the heating film, by using the graphene as the heating material of the heating film, the heating film can have a high heating temperature, a high temperature rise speed, and a high emission coefficient. In addition, both the graphene and the heating film have the sheet-like structure. Thus, when the heating film generates heat, the heat is mainly radiated out in the vertical direction of the heat generation surface, which provides strong directivity and relatively concentrated radiation heat. Therefore, the heating efficiency can be well enhanced. Further, by using graphene oxide as the raw material for preparing the heating film, the manufacturing process thereof is simple and easy to implement, and a modification can be easily performed, which facilitates an improvement of performance of the heating film.

According to an embodiment of the present disclosure, the dispersion has a solid content ranging from 1% to 10%, and preferably, from 3% to 7%.

According to an embodiment of the present disclosure, a maximum temperature of the low temperature treatment ranges from 250°C to 400°C, and a holding time at the maximum temperature of the low temperature treatment ranges from 5 min to 3 h; a maximum temperature of the carbonization treatment ranges from 900°C to 1,300°C, and a holding time at the maximum temperature of the carbonization treatment ranges from 5 min to 3 h; and a temperature of the graphitization treatment ranges from 1,800°C to 3,150°C, and a holding time at the temperature of the graphitization treatment ranges from 5 min to 3 h.

According to an embodiment of the present disclosure, the graphene film layer has a carbon content greater than or equal to 99%.

In yet another aspect, the present disclosure provides a heating element. According to an embodiment of the present disclosure, the heating element comprises the heating film described above. Therefore, the heating element has a high heating temperature, a high temperature rise speed, a high radiation-heating ratio, and a concentrated heating region, which greatly enhance a heating efficiency of the heating element. Those skilled in the art can understand that the heating element has all the features and advantages of the heating film described above, which are not described in detail herein.

In still yet another aspect, the present disclosure provides a heating appliance. According to an embodiment of the present disclosure, the heating appliance comprises the heating element described above. Therefore, the heating appliance has a high heating temperature, a high temperature rise speed, a high radiation-heating ratio, and a concentrated heating region, which greatly enhance a heating efficiency of the heating element.

According to an embodiment of the present disclosure, the heating appliance is an electric oven, a microwave oven, a combi steam oven, an electric kettle, an electric blanket, an electric warm air blower, an electric heater, a bath heater, an electric ceramic cooktop, or a disinfection cabinet.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic structural view of a heating film according to an embodiment of the present disclosure.
FIG. 2 is a schematic structural view of a heating film according to some other embodiments of the present disclosure.
FIG. 3 is a schematic structural view of a heating film according to some other embodiments of the present disclosure.
FIG. 4 is a schematic structural view of a heating film according to some other embodiments of the present disclosure.
FIG. 5 is a schematic structural view of a heating element according to some other embodiments of the present disclosure.
FIG. 6 is a schematic structural view of a heating element according to some other embodiments of the present disclosure.
FIG. 7 is a schematic structural view of a heating element according to some other embodiments of the present disclosure.

### DETAILED DESCRIPTION

Solutions of the present disclosure will be explained below with reference to examples. Those skilled in the art can understand that the examples described below are intended to explain the present disclosure, but should not be construed as limiting the scope of the present disclosure. Where specific techniques or conditions are not indicated in the examples, the procedures shall be carried out in accordance with the techniques or conditions described in the literature in the field or in accordance with the product specification. The reagents or instruments used without the indication of the manufacturers are all conventional products that can be purchased commercially.

The present disclosure is described below with reference to specific examples. It should be noted that these examples are merely descriptive and do not limit the present disclosure in any way.

In an aspect, the present disclosure provides a heating film. According to embodiments of the present disclosure, the heating film comprises graphene and an auxiliary agent. The auxiliary agent comprises at least one of a reinforcing agent, a warming agent, and a spectral modifier. The reinforcing agent comprises at least one of aqueous ammonia, glucose, ethylene glycol, ethylenediamine, carboxymethylcellulose, polyvinyl alcohol, polyethylene glycol, and chitin. The warming agent comprises at least one of carbon nanotubes, fullerene, carbon black, and graphene nanoplatelets. The spectral modifier comprises at least one of silicon carbide, boron nitride, and silicon nitride. Since the graphene is used as a heating material of the heating film, the heating film can have a high heating temperature, a high temperature rise speed, and high heat radiation power. In addition, both the graphene and the heating film have a sheet-like structure. Thus, when the heating film generates heat, the heat is mainly radiated out in a vertical direction of a heat generation surface, which provides strong directivity and concentrated radiation heat. Therefore, a heating efficiency can be well enhanced. Further, the graphene adopted in the present disclosure has the sheet-like structure. In addition, individual graphene layers are densely arranged and have each a relatively thin thickness. In this way, a graphene film can have satisfactory bending resistance, which is helpful to improve bending resistance of the heating film. Therefore, a design of a cut type of the heating film is unaffected by bendability of the heating film, which provides a large operation space and facilitates an assembly, improving a production yield. Further, it was found that, under the condition of a constant density, resistance of the graphene film decreases with an increase in a thickness of the graphene film; and under the condition that the thickness and the density are both constant, the resistance of the graphene film increases with an increase in the temperature of the graphene film. Based on this, the resistance of the heating film can be flexibly designed in accordance with conditions such as the thickness and heating temperature of the heating film to adjust a power of the heating film. In this way, in the present disclosure, various heating films with different powers can be obtained by adjusting the above-mentioned parameters. However, as for the above advantages, the Applicant did not find that any of the materials currently used for manufacturing the heating film can achieve the above-mentioned technical effects of the present disclosure.

Further, an auxiliary agent comprised in the heating film may be used in a preparation process. The auxiliary agent may comprise at least one of a reinforcing agent, a warming agent, and a spectral modifier, to improve performance of the heating film. In particular, the above-mentioned micromolecular or macromolecular organic substances, via carbon elements thereof, form chemical bonds (C-C bonds) with the graphene. The reinforcing agent can effectively enhance connectivity between layers of graphene, thereby well improving structural stability of the heating film. For example, the reinforcing agent may comprise at least one of aqueous ammonia, glucose, ethylene glycol, ethylenediamine, carboxymethylcellulose, polyvinyl alcohol, polyethylene glycol, and chitin. In some embodiments, the warming agent may be carbon nanoparticles, and specifically, the warming agent may comprise at least one of carbon nanotubes, fullerene, carbon black, and graphene nanoplatelets. In a process of preparing the heating film, secondary graphitization of the graphite at a high temperature can be effectively prevented to reduce occurrences of fusing. The warming agent is also conducive to effectively increasing the maximum use temperature of the heating film, i.e., increasing the maximum heating temperature of the heating film. In some embodiments, the spectral modifier may be nanoparticles. The spectral modifier comprises at least one of silicon carbide, boron nitride, and silicon nitride. With the above spectral modifier, an emission spectrum of the heating film can be effectively regulated to obtain the heating film having a broad emission spectrum. Moreover, the above spectral modifier is non-conductive and resistant to high temperature (resistant to a temperature greater than or equal to 1,300°C). A resistance of the heating film can be adjusted by adjusting an amount of the spectral modifier. With an increase in the amount of the spectral modifier, the resistance of the heating film becomes greater, the maximum heating temperature of the heating film decreases relatively, and an emission wavelength of the heating film becomes relatively longer. In summary, in the present disclosure, the heating film having a suitable maximum heating temperature and a relatively great emission wavelength can be obtained by adjusting the amount of the auxiliary agent such as the warming agent and the spectral modifier (radiation energy of the heating film becomes higher as the emission wavelength becomes shorter).

The graphene has a high emission coefficient of more than 90%, which is much higher than that of natural graphite (60%) and artificial graphite (80%). Therefore, in the present disclosure, the use of graphene can effectively increase the emission coefficient of the heating film, and thus the heat radiation power of the heating film is enhanced, increasing the heating rate and the maximum heating temperature of the heating film.

According to some embodiments of the present disclosure, the heating film is the graphene. That is, the heating film is prepared only with graphene. In this case, the heating film has a high heating temperature, a high heat radiation power, and a satisfactory bending resistance, facilitating designs of a variety of cut types of the heating film.

According to some embodiments of the present disclosure, based on a total mass of the heating film, the heating film comprises 95% to 99.95% by mass (e.g., 95%, 95.5%, 96%, 96.5%, 97%, 97.5%, 98%, 98.5%, 99%, 99.5%, and 99.95%, by mass) of the graphene and 0.05% to 5% by mass (e.g., 0.05%, 0.1%, 0.5%, 1%, 1.5%, 2%, 2.5%, 3%, 3.5%, 4%, 4.5%, and 5%, by mass) of the reinforcing agent. That is, during preparation of the heating film, a predetermined amount of reinforcing agent is added to the graphene. The reinforcing agent of the above-mentioned mass percentage can enhance interlayer connectivity between graphene layers in the heating film, while ensuring the high heating temperature and heat radiation power and the satisfactory bending resistance of the heating film. In this way, the structural stability of the heating film can be well improved to prevent undesirable cases of misalignment or detachment of the graphene layers of the heating film during the subsequent processing.

According to some embodiments of the present disclosure, based on the total mass of the heating film, the heating film comprises 70% to 80% by mass (e.g., 70%, 71%, 72%, 73%, 74%, 75%, 76%, 77%, 78%, 79%, and 80%, by mass) of the graphene and 20% to 30% by mass (e.g., 20%, 21%, 22%, 23%, 24%, 25%, 26%, 27%, 28%, 9%, and 30%, by mass) of the warming agent. That is, during the preparation of the heating film, a predetermined amount of the warming agent is added to the graphene. The warming agent of the above-mentioned mass percentage can further increase the maximum heating temperature of the heating film, while ensuring the high heat radiation power and the satisfactory bending resistance of the heating film.

According to some embodiments of the present disclosure, based on the total mass of the heating film, the heating film comprises 90% to 99% by mass (e.g., 90%, 91%, 92%, 93%, 94%, 95%, 95.5%, 96%, 96.5%, 97%, 97.5%, 98%, 98.5%, and 99%, by mass) of the graphene and 1% to 10% by mass (e.g., 1%, 1.5%, 2%, 2.5%, 3%, 3.5%, 4.5%, 5%, 6%, 7%, 8%, 9%, and 10%, by mass) of the spectral modifier. That is, during the preparation of the heating film, a predetermined amount of reinforcing agent is added to the graphene. The reinforcing agent of the above-mentioned mass percentage can further broaden the emission spectrum of the heating film, while ensuring the high heating temperature and the satisfactory bending resistance of the heating film. Therefore, the heat radiation power of the heating film can be further improved.

According to some embodiments of the present disclosure, based on the total mass of the heating film, the heating film comprises 70% to 80% by mass (e.g., 70%, 71%, 72%, 73%, 74%, 75%, 76%, 77%, 78%, 79%, and 80%, by mass) of the graphene, 0.05 to 5% by mass (e.g., 0.05%, 0.1%, 0.5%, 1%, 1.5%, 2%, 2.5%, 3%, 3.5%, 4%, 4.5%, and 5%, by mass) of the reinforcing agent, and 20% to 30% by mass (e.g., 20%, 21%, 22%, 23%, 24%, 25%, 26%, 27%, 28%, 9%, and 30%, by mass) of the warming agent. That is, during the preparation of the heating film, a predetermined amount of reinforcing agent and a predetermined amount of warming agent are added to the graphene. The reinforcing agent and the warming agent of the above-mentioned mass percentages can further enhance interlayer connectivity between graphene layers in the heating film, while ensuring the high heating temperature and heat radiation power and the satisfactory bending resistance of the heating film. In this way, the structural stability of the heating film can be well improved to prevent undesirable cases of misalignment or detachment of the graphene layers of the heating film during subsequent processing. Further, the maximum heating temperature of the heating film can be further increased.

According to some embodiments of the present disclosure, based on the total mass of the heating film, the heating film comprises 80% to 99% by mass (e.g., 80%, 81%, 82%, 83%, 84%, 85%, 6%, 87%, 88%, 89%, 90%, 91%, 92%, 93%, 94%, 95%, 95.5%, 96%, 96.5%, 97%, 97.5%, 98%, 98.5%, and 99%, by mass) of the graphene, 0.05% to 5% by mass (e.g., 0.05%, 0.1%, 0.5%, 1%, 1.5%, 2%, 2.5%, 3%, 3.5%, 4%, 4.5%, and 5%, by mass) of the reinforcing agent, and 1% to 10% by mass (e.g., 1%, 1.5%, 2%, 2.5%, 3%, 3.5%, 4%, 4.5%, 5%, 6%, 7%, 8%, 9%, and 10%, by mass) of the spectral modifier. That is, during the preparation of the heating film, a predetermined amount of reinforcing agent and a predetermined amount of spectral modifier are added to the graphene. The reinforcing agent and the spectral modifier of the above-mentioned mass percentages can further enhance interlayer connectivity between graphene layers in the heating film, while ensuring the high heating temperature and heat radiation power and the satisfactory bending resistance of the heating film. In this way, the structural stability of the heating film can be well improved to prevent undesirable cases of misalignment or detachment of the graphene layers of the heating film during subsequent processing. Further, the emission spectrum of the heating film can be further broadened and thus the heat radiation power of the heating film can be further increased.

According to some embodiments of the present disclosure, based on the total mass of the heating film, the heating film comprises 70% to 80% by mass (e.g., 70%, 71%, 72%, 73%, 74%, 75%, 76%, 77%, 78%, 79%, and 80%, by mass) of the graphene, 20% to 30% by mass (e.g., 20%, 21%, 22%, 23%, 24%, 25%, 26%, 27%, 28%, 9%, and 30%, by mass) of the warming agent, and 1% to 10% by mass (e.g., 1%, 1.5%, 2%, 2.5%, 3%, 3.5%, 4%, 4.5%, 5%, 6%, 7%, 8%, 9%, and 10%, by mass) of the spectral modifier. That is, during the preparation of the heating film, a predetermined amount of warming agent and a predetermined amount of spectral modifier are added to the graphene. The warming agent and the spectral modifier of the above-mentioned mass percentages can further increase the maximum heating temperature of the heating film and broaden the emission spectrum of the heating film, while ensuring the high heating temperature and heat radiation power and the satisfactory bending resistance of the heating film. Therefore, the heat radiation power of the heating film can be further increased.

According to some embodiments of the present disclosure, based on the total mass of the heating film, the heating film comprises 70% to 80% by mass (e.g., 70%, 71%, 72%, 73%, 74%, 75%, 76%, 77%, 78%, 79%, and 80%, by mass) of the graphene, 0.05% to 5% by mass (e.g., 0.05%, 0.1%, 0.5%, 1%, 1.5%, 2%, 2.5%, 3%, 3.5%, 4%, 4.5%, and 5%, by mass) of the reinforcing agent, 20% to 30% by mass (e.g., 20%, 21%, 22%, 23%, 24%, 25%, 26%, 27%, 28%, 9%, and 30%, by mass) of the warming agent, and 1% to 10% by mass (e.g., 1%, 1.5%, 2%, 2.5%, 3%, 3.5%, 4%, 4.5%, 5%, 6%, 7%, 8%, 9%, and 10%, by mass) of the spectral modifier. The reinforcing agent, the warming agent, and the spectral modifier of the above-mentioned mass percentages can further enhance interlayer connectivity between graphene layers in the heating film, while ensuring the high heating temperature and heat radiation power and the satisfactory bending resistance of the heating film. In this way, the structural stability of the heating film can be well improved to prevent undesirable cases of misalignment or detachment of the graphene layers of the heating film during subsequent processing. Further, the maximum heating temperature of the heating film can be further increased, and the emission spectrum of the heating film can be further broadened. Therefore, the heat radiation power of the heating film can be further increased.

According to some embodiments of the present disclosure, the heating temperature of the heating film ranges from 500°C to 1,700°C. For example, the heating temperature of the heating film may be 500°C, 550°C, 600°C, 700°C, 800°C, 900°C, 1,000°C, 1,100°C, 1,200°C, 1,300°C, 1,400°C, 1,500°C, 1,600°C, 1,700°C, or the like. Therefore, the maximum heating temperature of the heating film of the present disclosure can reach 1,700°C. In addition, based on specific application requirements of the heating film, those skilled in the art can flexibly adjust the maximum heating temperature of the heating film by adjusting the amount of the auxiliary agent such as the warming agent as well as the amount of the graphene. Therefore, more application heating requirements of the heating film can be satisfied.

According to some embodiments of the present disclosure, the heating film has an emission wavelength ranging from 3 µm to 15 µm, such as 3 µm , 4 µm, 5 µm, 6 µm, 7 µm, 8 µm, 9 µm, 10 µm, 12 µm, 13 µm, 14 µm, or 15 µm. It can be seen that the maximum emission wavelength of the heating film of the present disclosure can reach 15 µm. That is, the heating film has a large proportion of radiation heating, which can better increase the heating rate and thus improve the heating efficiency and an effect of concentrated heating to improve an energy utilization rate. Moreover, in the present disclosure, a specific emission wavelength of the heating film can be flexibly adjusted by adjusting a content of the spectral modifier. In this way, the heating film can meet various application requirements.

According to some embodiments of the present disclosure, the heating film has a thickness ranging from 20 µm to 1,000 µm, such as 20 µm, 50 µm, 70 µm, 100 µm, 130 µm, 150 µm, 180 µm, 200 µm, 250 µm, 300 µm, 350 µm, 400 µm, 450 µm, 500 µm, 550 µm, 600 µm, 650 µm, 700 µm, 750 µm, 800 µm, 850 µm, 900 µm, 950 µm, or 1,000 µm. As described above, under the condition of the constant density, the resistance of the graphene film decreases with an increase in the thickness of the graphene film; and under the condition that both the thickness and the density are constant, the resistance of the graphene film decreases with an increase in the temperature of the graphene film. In this way, in the present disclosure, the resistance of the heating film can be adjusted by simultaneously adjusting the thickness and density of the heating film, thereby adjusting the heating temperature and the emission wavelength of the heating film. With the above thickness, the heating film has a suitable density while satisfying the high heating temperature and the emission wavelength of the heating film, which is convenient for designs of a variety of cut types of the heating film.

In an embodiment of the present disclosure, the heating film can have various specific cut types. Those skilled in the art can flexibly design the cut type of the heating film based on requirements of actual situations such as the resistance and the power of the heating film. Some cut types of the heating film will be described below in accordance with some specific embodiments of the present disclosure.

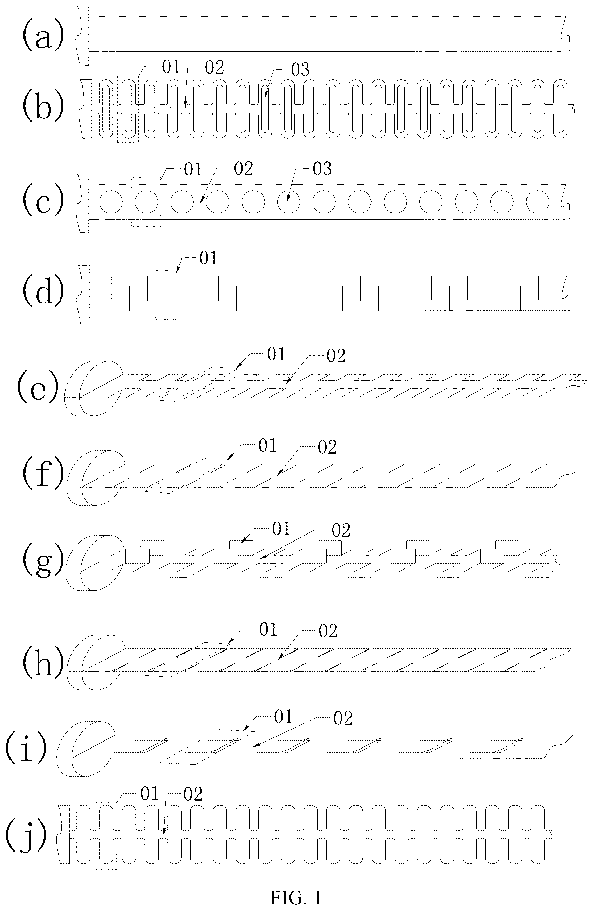

According to some embodiments of the present disclosure, as illustrated in FIG. 1, the heating film comprises a plurality of heating units 01 sequentially arranged in a length direction. Adjacent heating units 01 are spaced apart from each other and connected through a connection segment 02. Therefore, the heating film of the present disclosure can be cut into various structures with different cut types to meet different usage requirements. In some embodiments of the present disclosure, as illustrated in FIG. 1, the heating unit has an outer peripheral wall formed in an oblong shape or a polygonal shape.

In some embodiments of the present disclosure, as illustrated in FIG. 1(b), FIG. 1(c), and FIG. 1(i), each heating unit 01 has a hollowed-out hole 03. Therefore, the hollowed-out hole can increase a heat dissipation rate of the heating film and a heating rate of the to-be-heated object.

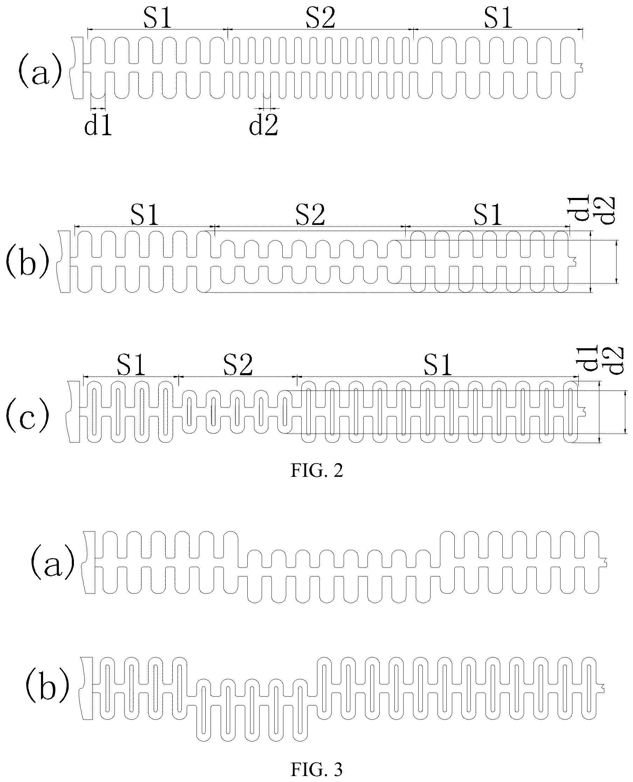

In some embodiments of the present disclosure, as illustrated in FIG. 2, the heating film has a first heating segment S1 and a second heating segment S2 that are adjacent to each other in the length direction. The first heating segment S1 comprises multiple heating units 01 connected to each other. The second heating segment S2 comprises multiple heating units 10 adjacent to each other. Each of the multiple heating units 01 corresponding to the first heating segment S1 has a smaller size than each of the multiple heating units 10 corresponding to the second heating segment S2. For example, as illustrated in FIG. 2(a), the heating unit 01 corresponding to the first heating segment S1 has the same length as the heating unit 10 corresponding to the second heating segment S2, but a width d1 of the heating unit 01 corresponding to the first heating segment S1 and a width d2 of the heating unit 10 corresponding to the second heating segment S2 are different. For example, as illustrated in FIG. 2(b) and FIG. 2(c), the heating unit 01 corresponding to the first heating segment S1 has the same width as the heating unit 10 corresponding to the second heating segment S2, but a length d1 of the heating unit 01 corresponding to the first heating segment S1 and a length d2 of the heating unit 10 corresponding to the second heating segment S2 are different. Therefore, the structure of the heating film can be diversified.

In some embodiments of the present disclosure, as illustrated in FIG. 3, the first heating segment S1 and the second heating segment S2 are offset from each other in a width direction of the heating film. Therefore, the structure of the heating film can be diversified.

In some embodiments of the present disclosure, as illustrated in FIG. 1(d), FIG. 1(e), FIG. 1(f), FIG. 1(h), FIG. 1(i), and FIG. 1(j), the heating film has a plurality of notches arranged at an interval in the length direction. Therefore, the structure of the heating film can be diversified. Further, in some embodiments of the present disclosure, as illustrated in FIG. 1(i), each notch is defined through separating a part of the heating film from the remaining part of the heating film and then bending the part of the heating film.

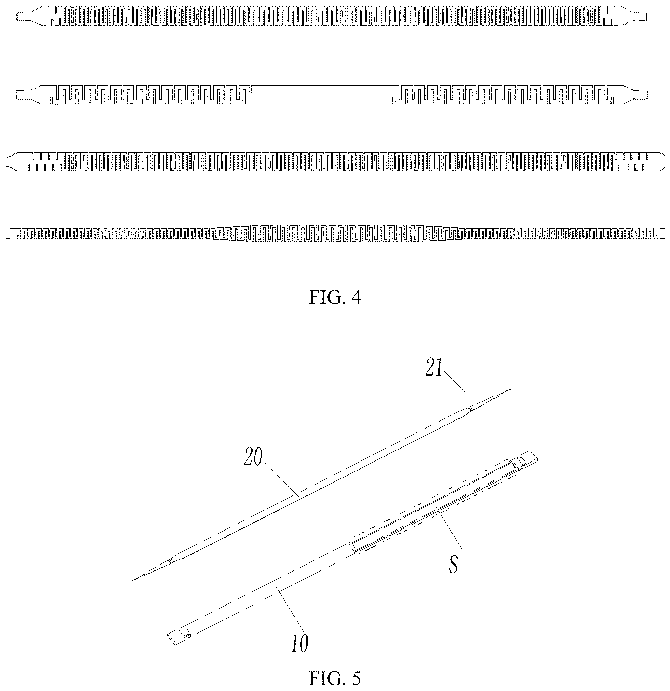

In some embodiments, as illustrated in FIG. 4, one heating film may have multiple different cut types, or one heating film may have one cut type distributed with an uneven density.

In another aspect, the present disclosure provides a method for preparing the heating film described above. According to an embodiment of the present disclosure, the method for preparing the heating film comprises the following steps.

In S100, graphene oxide and an auxiliary agent are uniformly dispersed in a solvent to obtain a dispersion.

According to some embodiments of the present disclosure, the auxiliary agent comprises at least one of the reinforcing agent, the warming agent, and the spectral modifier. The solvent may be water.

According to some embodiments of the present disclosure, the dispersion has a solid content ranging from 1% to 10%. For example, the solid content is 1%, 2%, 3%, 4%, 5%, 6%, 7%, 8%, 9%, 10%, etc. In the dispersion with the above-mentioned solid content, the solute comprising the graphene can be dispersed relatively uniformly and is convenient for uniform coating. When the solid content is smaller than 1%, the dispersion is relatively dilute and thus has a relatively great fluidity, which is not conducive to coating the dispersion and also affects uniformity of the graphene oxide film. When the solid content of the dispersion is greater than 10%, the dispersion is difficult to disperse uniformly. In some specific embodiments, the dispersion has a solid content ranging from 3% to 7%.

In S200, a graphene oxide film layer is obtained by coating the dispersion and drying.

The coating method is not specifically limited. Those skilled in the art can flexibly select an appropriate coating method as desired, such as spin coating, scrape coating, and the like, as long as it is conducive to obtaining of a graphene oxide film having a uniform thickness.

In S300, low temperature treatment, carbonization treatment, and graphitization treatment are sequentially performed on the graphene oxide film layer to obtain a graphene film layer.

In the above operations, after the low temperature treatment, the carbonization treatment, and the graphitization treatment, the graphene oxide can be deoxidized to obtain the graphene film layer.

In some embodiments, the maximum temperature of the low temperature treatment ranges from 250°C to 400°C, for example, 250°C, 280°C, 300°C, 320°C, 350°C, 380°C, or 400°C, and a holding time at the maximum temperature of the low temperature treatment ranges from 5 min to 3 h (for example, 5 min, 10 min, 30 min, 45 min, 1 h, 1.5 h, 2 h, 2.5 h, or 3 h). Under the above conditions, deoxidation of the graphene oxide is initiated, and the graphene oxide can be controlled to have an oxygen content of less than 10%. The maximum temperature of the carbonization treatment ranges from 900°C to 1,300°C, for example, 900°C, 950°C, 1,000°C, 1,050°C, 1,100°C, 1,150°C, 1,200°C, 1,250°C, or 1,300°C, and a holding time at the maximum temperature of the carbonization treatment ranges from 5 min to 3 h (for example, 5 min, 10 min, 30 min, 45 min, 1 h, 1.5 h, 2 h, 2.5 h, or 3 h). Under the above carbonization conditions, deoxidation of the graphene oxide continues, and the graphene oxide can be controlled to have the oxygen content of less than 5%. The maximum temperature of the graphitization treatment ranges from 1,800°C to 3,150°C, for example, 1,800°C, 1,900°C, 2,000°C, 2,100°C, 2,200°C, 2,300°C, 2,400°C, 2,500°C, 2,600°C, 2,700°C, 2,800°C, 2,900°C, 3,000°C, 3,100°C, or 3,150°C. Holding time at the maximum temperature of the graphitization treatment ranges from 5 min to 3 h (such as 5 min, 10 min, 30 min, 45 min, 1 h, 1.5 h, 2 h, 2.5 h, or 3 h). Under the above conditions, the deoxidation treatment of graphene oxide can be efficiently completed to obtain the graphene film layer.

According to some embodiments of the present disclosure, the heating film only comprises the graphene. That is, the heating film is added with no auxiliary agents such as the reinforcing agent, the warming agent, and the spectral modifier. The graphene film layer prepared through the above method has the carbon content greater than or equal to 99%. Therefore, the prepared graphene film layer has a high purity of graphene, which is conducive to obtaining the heating film with satisfactory performance.

In S400, calendering and cutting are performed on the graphene film layer to obtain the heating film. The cut type of the heating film obtained after the cutting can refer to FIG. 1 to FIG. 4.

According to an embodiment of the present disclosure, since the graphene is used as the heating material of the heating film, the heating film can have a high heating temperature, a high temperature rise speed, and a high heat radiation power. In addition, both the graphene and the heating film have the sheet-like structure. Thus, when the heating film generates heat, the heat is mainly radiated out in the vertical direction of the heat generation surface, which provides the strong directivity and the concentrated radiation heat. Therefore, the heating efficiency can be well enhanced. Further, the graphene, which has the sheet-like structure, is used in the present disclosure. In addition, the individual graphene layers are densely arranged and have each a relatively thin thickness. In this way, a graphene film can have satisfactory bending resistance, which is helpful to improve the bending resistance of the heating film. Therefore, a design of the cut type of the heating film is unaffected by the bendability of the heating film, which provides the large operation space and facilitates the assembly, improving the production yield. Further, it was found that, under the condition of the constant density, the resistance of the graphene film decreases with an increase in the thickness of the graphene film; and under the condition that both the thickness and the density are constant, the resistance of the graphene film decreases with an increase in the temperature of the graphene film. Based on this, the resistance of the heating film can be flexibly designed in accordance with the conditions such as the thickness and heating temperature of the heating film to adjust the power of the heating film. In this way, in the present disclosure, various heating films with different powers can be obtained by adjusting the above parameters. However, as for the above advantages, the Applicant did not find that any of the materials currently used for manufacturing the heating film can achieve the above-mentioned technical effects of the present disclosure. Further, by using graphene oxide as the raw material for preparing the heating film, the manufacturing process thereof is simple and easy to implement, and a modification can be easily performed, which facilitates an improvement of performance of the heating film.

In addition, in some embodiments, the reinforcing agent comprises at least one of aqueous ammonia, glucose, ethylene glycol, ethylenediamine, carboxymethylcellulose, polyvinyl alcohol, polyethylene glycol, and chitin. The above-mentioned micromolecular or macromolecular organic substances, via carbon elements thereof, form chemical bonds (C-C bonds) with the graphene. The reinforcing agent can effectively enhance the connectivity between layers of the graphene, thereby well improving structural stability of the heating film. In some embodiments, the warming agent may be carbon nanoparticles, and specifically, the warming agent may comprise at least one of carbon nanotubes, fullerene, carbon black, and graphene nanoplatelets. In a process of preparing the heating film, secondary graphitization of the graphite at a high temperature can be effectively prevented to reduce occurrences of fusing. The warming agent is also conducive to effectively increasing the maximum use temperature of the heating film, i.e., increasing the maximum heating temperature of the heating film. In some embodiments, the spectral modifier may be nanoparticles. The spectral modifier comprises at least one of silicon carbide, boron nitride, and silicon nitride. With the above-mentioned spectral modifier, an emission spectrum of the heating film can be effectively regulated to obtain the heating film having a broad emission spectrum. Moreover, the above spectral modifier is non-conductive and resistant to high temperature (resistant to a temperature greater than or equal to 1,300°C). A resistance of the heating film can be adjusted by adjusting an amount of the spectral modifier. With an increase in the amount of the spectral modifier, the resistance of the heating film becomes greater, the maximum heating temperature of the heating film decreases relatively, and an emission wavelength of the heating film becomes relatively longer. In summary, in the present disclosure, the heating film having a suitable maximum heating temperature and a relatively great emission wavelength can be obtained by adjusting the amount of the auxiliary agent such as the warming agent and the spectral modifier.

In yet another aspect, the present disclosure provides a heating element. According to an embodiment of the present disclosure, the heating element comprises the heating film described above. Therefore, the heating element has a high heating temperature, a high temperature rise speed, a high radiation-heating ratio, and a concentrated heating region, which greatly enhance a heating efficiency of the heating element. Those skilled in the art can understand that the heating element has all the features and advantages of the heating film described above, which are not described in detail herein.

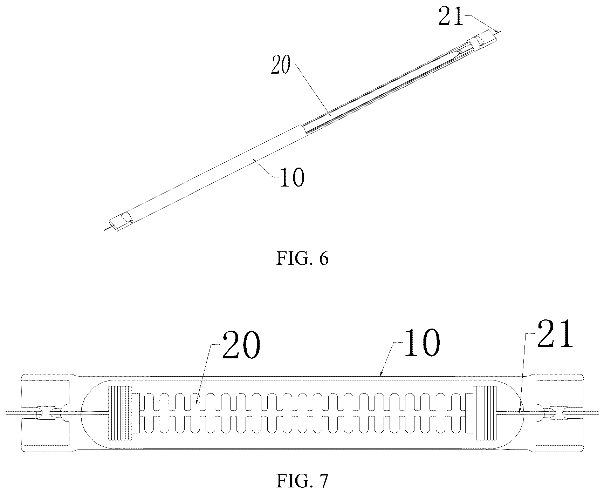

In some embodiments, as illustrated in FIG. 5, FIG. 6, and FIG. 10, the heating element further comprises a sleeve 10. Region S in FIG. 5 refers to a partial cross-sectional view of the sleeve. The heating film 20 is disposed in the sleeve 10, and has terminals 21 arranged at two ends of the heating film 20. The sleeve may be a quartz glass tube or the like.

In still yet another aspect, the present disclosure provides a heating appliance. According to an embodiment of the present disclosure, the heating appliance comprises the heating element described above. Therefore, the heating appliance has a high heating temperature, a high temperature rise speed, a high radiation-heating ratio, and a concentrated heating region, which greatly enhance a heating efficiency of the heating element.

According to an embodiment of the present disclosure, the heating appliance is an electric oven, a microwave oven, a combi steam oven, an electric kettle, an electric blanket, or an electric warm air blower.

Those skilled in the art can understand that, in addition to the above-mentioned heating element, the heating appliance may further comprise other structures or components necessary for the heating appliance. As an example, in addition to the above-mentioned heating element, the electric oven further comprises a housing, a heating space, a base, a plug, and other necessary structures or components.

### EXAMPLES

### Example 1

Graphene oxide was homogenously dispersed to obtain a uniform graphene oxide dispersion. The graphene oxide dispersion had a solid content of 6%. Then, the graphene oxide dispersion was coated and dried, and then sequentially subjected to low-temperature treatment (at a temperature of 300°C with a holding time of 0.5 h), carbonization treatment (at a temperature of 1,100°C with a holding time of 1 h), and graphitization treatment (at a temperature of 2,000°C with a holding time of 2 h) to obtain the graphene film layer. Finally, the graphene film layer was calendered to a predetermined thickness and underwent cutting (as illustrated in FIG. 1) to obtain the heating film. Then, a graphene heating tube with low power was prepared. The graphene heating tube had a filament temperature of 750°C (i.e., the maximum heating temperature) and had an emission wavelength of 10 µm.

### Example 2

Graphene oxide and glucose were mixed based on a mass ratio of 1:0.1, and then the mixture was homogenously dispersed to obtain a uniform graphene oxide dispersion. The graphene oxide dispersion had a solid content of 4.2%. Then, the graphene oxide dispersion was coated and dried, and then was sequentially subjected to low-temperature treatment (at a temperature of 400°C with a holding time of 1 h), carbonization treatment (at a temperature of 1,200°C with a holding time of 0.5 h), and graphitization treatment (at a temperature of 2,600°C with a holding time of 1 h) to obtain the graphene film layer. Finally, the graphene film layer was calendered to a predetermined thickness and was cut (as illustrated in FIG. 1) to obtain the heating film. Then, a graphene heating tube with a low power was prepared. The graphene heating tube had a filament temperature of 950°C (i.e., the maximum heating temperature) and had an emission wavelength of 8 µm.

### Example 3

Graphene oxide and carboxymethylcellulose were mixed based on a mass ratio of 1:0.15, and then the mixture was homogenously dispersed to obtain a uniform graphene oxide dispersion. The graphene oxide dispersion had a solid content of 4.5%. Then, the graphene oxide dispersion was coated and dried, and then was sequentially subjected to low-temperature treatment (at a temperature of 350°C with a holding time of 1 h), carbonization treatment (at a temperature of 1,150°C with a holding time of 0.5 h), and graphitization treatment (at a temperature of 2,800°C with a holding time of 15 min) to obtain the graphene film layer. Finally, the graphene film layer was calendered to a predetermined thickness and underwent cutting (as illustrated in FIG. 1) to obtain the heating film. Then, a graphene heating tube with low power was prepared. The graphene heating tube had a filament temperature of 850°C (i.e., the maximum heating temperature) and had an emission wavelength of 9 µm.

### Example 4

Graphene oxide and carbon nanotubes were mixed based on a mass ratio of 7:3, and then the mixture was homogenously dispersed to obtain a uniform graphene oxide dispersion. The graphene oxide dispersion had a solid content of 5.5%. Then, the graphene oxide dispersion was coated and dried, and then was sequentially subjected to low-temperature treatment (at a temperature of 400°C with a holding time of 2 h), carbonization treatment (at a temperature of 1,300°C with a holding time of 0.5 h), and graphitization treatment (at a temperature of 3,100°C with a holding time of 0.5 h) to obtain the graphene film layer. Finally, the graphene film layer was calendered to a predetermined thickness and underwent cutting (as illustrated in FIG. 1) to obtain the heating film. Then, a graphene heating tube with ultra-high power was prepared. The graphene heating tube had a filament temperature of 1,700°C (i.e., the maximum heating temperature) and had an emission wavelength of 3 µm.

### Example 5

The graphene oxide and silicon carbide nanoparticles were mixed based on a mass ratio of 9:1, and then the mixture was homogenously dispersed to obtain a uniform graphene oxide dispersion. The graphene oxide dispersion had a solid content of 3.5%. Then, the graphene oxide dispersion was coated and dried, and then was sequentially subjected to low-temperature treatment (at a temperature of 250°C with a holding time of 1 h), carbonization treatment (at a temperature of 1,300°C with a holding time of 0.5 h), and graphitization treatment (at a temperature of 2,400°C with a holding time of 3 h), to obtain a graphene film layer. Finally, the graphene film layer was calendered to a predetermined thickness and underwent cutting (as illustrated in FIG. 1) to obtain the heating film. Then, a graphene heating tube with low power was prepared. The graphene heating tube had a filament temperature of 600°C (i.e., the maximum heating temperature) and had an emission wavelength of 12 µm.

### Example 6

Graphene oxide, carboxymethylcellulose, and carbon nanotubes were mixed based on a mass ratio of 9:0.1:1, and then the mixture was homogenously dispersed to obtain a uniform graphene oxide dispersion. The graphene oxide dispersion had a solid content of 4%. Then, the graphene oxide dispersion was coated and dried, and then was sequentially subjected to low-temperature treatment (at a temperature of 400°C with a holding time of 2 h), carbonization treatment (at a temperature of 1,200°C with a holding time of 1.5 h), and graphitization treatment (at a temperature of 2,400°C with a holding time of 2 h), to obtain the graphene film layer. Finally, the graphene film layer was calendered to a predetermined thickness and underwent cutting (as illustrated in FIG. 1) to obtain the heating film. Then, a graphene heating tube with low power was prepared. The graphene heating tube had a filament temperature of 800°C (i.e., the maximum heating temperature) and had an emission wavelength of 10 µm.

### Example 7

Graphene oxide, carboxymethylcellulose, and carbon nanotubes were mixed based on a mass ratio of 7:0.1:2.9, and then the mixture was homogenously dispersed to obtain a uniform graphene oxide dispersion. The graphene oxide dispersion had a solid content of 3.5%. Then, the graphene oxide dispersion was coated and dried, and then was sequentially subjected to low-temperature treatment (at a temperature of 400°C with a holding time of 1), carbonization treatment (at a temperature of 1,200°C with a holding time of 1 h), and graphitization treatment (at a temperature of 3,100°C with a holding time of 2 h), to obtain the graphene film layer. Finally, the graphene film layer was calendered to a predetermined thickness and underwent cutting (as illustrated in FIG. 1) to obtain the heating film. Then, a graphene heating tube with ultra-high power was prepared. The graphene heating tube had a filament temperature of 1,700°C (i.e., the maximum heating temperature) and had an emission wavelength of 3 µm.

### Example 8

Graphene oxide, carboxymethylcellulose, carbon nanotubes, and silicon carbide nanoparticles were mixed based on a mass ratio of 7:0.2:2.3:0.5, and then the mixture was homogenously dispersed to obtain a uniform graphene oxide dispersion. The graphene oxide dispersion had a solid content of 5%. Then, the graphene oxide dispersion was coated and dried, and then was sequentially subjected to low-temperature treatment (at a temperature of 300°C with a holding time of 1 h), carbonization treatment (at a temperature of 1,100°C with a holding time of 15 min), and graphitization treatment (at a temperature of 2,000°C with a holding time of 1 h), to obtain a graphene film layer. Finally, the graphene film layer was calendered to a predetermined thickness and underwent cutting (as illustrated in FIG. 1) to obtain the heating film. Then, a graphene heating tube with low power was prepared. The graphene heating tube had a filament temperature of 650°C (i.e., the maximum heating temperature) and had an emission wavelength of 11 µm.

A comparison of parameters and test results of the above examples can be made with reference to Table 1. Steps of a test method for a peeling force comprises: applying a double-sided adhesive tape (4972 double-sided adhesive tape) on each of two surfaces of the heating film, removing a release paper from the double-sided adhesive tape at one surface and fixing the double-sided adhesive tape to a steel plate, performing 180° peeling on the double-sided adhesive tape at the other surface with a peeling speed of 300 mm/min to measure the peeling force during peeling. The average value in a steady period was taken. With an increase of the peeling force, an interlayer interaction force of the heating film becomes better.

**[Table 1]**

| | Compositional formula | | | | Filament temperature | Emission wavelength | Peeling force |
|---|---|---|---|---|---|---|---|
| | Graphene | Reinforcing agent | Warming agent | Spectral modifier | | | |
| Example 1 | Graphene | - | - | - | 750°C | 10 µm | 12.6 gf/25mm |
| Example 2 | Graphene | Glucose | - | - | 950°C | 8 µm | 30.6 gf/25mm |
| Example 3 | Graphene | Carboxymethylcellulose | - | - | 850°C | 9 µm | 47.3 gf/25mm |
| Example 4 | Graphene | - | Carbon nanotube | - | 1,700°C | 3 µm | 10.9 gf/25mm |
| Example 5 | Graphene | - | - | Silicon carbide | 600°C | 12 µm | 8.7 gf/25mm |
| Example 6 | Graphene | Carboxymethylcellulose | Carbon nanotube | - | 800°C | 10 µm | 21.3 gf/25mm |
| Example 7 | Graphene | Carboxymethylcellulose | Carbon nanotube | - | 1,700°C | 3 µm | 33.2 gf/25mm |
| Example 8 | Graphene | Carboxymethylcellulose | Carbon nanotube | Silicon carbide | 650°C | 11 µm | 25.6 gf/25mm |

From Table 1, a comparison of Example 1, Example 2, and Example 3 reveals that the interlayer interaction force of the heating film was effectively increased when the reinforcing agent was added. A comparison between Example 1 and Example 4 reveals that the heating temperature of the heating film was greatly increased when the warming agent was added. That is, the filament temperature of the heating tube was greatly increased. However, due to an addition of the warming agent, the emission wavelength of the heating film is relatively reduced. A comparison of Example 1, Example 5, and Example 5 to Example 8 reveals that the emission wavelength of the heating film was effectively improved when the spectral modifier was added. However, due to the non-conductivity of the spectral modifier, the resistance of the heating film can be increased when the spectral modifier was added, and thus the heating temperature was lowered. Test data of Example 6 and Example 7 reveal that the heating temperature and the emission wavelength of the heating film were adjusted by adjusting the amount of the warming agent. In summary, in the present disclosure, the heating film having a high heating temperature, a satisfactory emission spectrum, and a stable structure can be obtained by adjusting the components of the heating film and the amount of the components.

The terms "first" and "second" are only used for descriptive purposes, and cannot be understood as indicating or implying relative importance or implicitly indicating the number of indicated technical features. Therefore, the features associated with "first" and "second" may explicitly or implicitly comprise at least one of the features. In the description of the present disclosure, "plurality" means at least two, unless otherwise specifically defined.

Reference throughout this specification to terms such as "an embodiment," "some embodiments," "an example," "a specific example," or "some examples" means that a particular feature, structure, material, or characteristic described in connection with the embodiment or example is comprised in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although the embodiments of the present disclosure have been shown and described above, it should be understood that the above-mentioned embodiments are illustrative and should not be construed as limiting the present disclosure. Those skilled in the art can make changes, modifications, substitutions, and alternations to the above-mentioned embodiments within the scope of the present disclosure.

## Claims

1. A heating film, comprising graphene and an auxiliary agent, the auxiliary agent comprising at least one of a reinforcing agent, a warming agent, and a spectral modifier, wherein:
the reinforcing agent comprises at least one of aqueous ammonia, glucose, ethylene glycol, ethylenediamine, carboxymethylcellulose, polyvinyl alcohol, polyethylene glycol, and chitin;
the warming agent comprises at least one of carbon nanotubes, fullerene, carbon black, and graphene nanoplatelets; and
the spectral modifier comprises at least one of silicon carbide, boron nitride, and silicon nitride.

2. The heating film according to claim 1, satisfying at least one of the following conditions that:
the heating film is the graphene; or
based on a total mass of the heating film, the heating film comprises 95% to 99.95% by mass of the graphene and 0.05% to 5% by mass of the reinforcing agent; or
based on the total mass of the heating film, the heating film comprises 70% to 80% by mass of the graphene and 20% to 30% by mass of the warming agent; or
based on the total mass of the heating film, the heating film comprises 90% to 99% by mass of the graphene and 1% to 10% by mass of the spectral modifier; or
based on the total mass of the heating film, the heating film comprises 70% to 80% by mass of the graphene, 0.05% to 5% by mass of the reinforcing agent, and 20% to 30% by mass of the warming agent; or
based on the total mass of the heating film, the heating film comprises 80% to 99% by mass of the graphene, 0.05% to 5% by mass of the reinforcing agent, and 1% to 10% by mass of the spectral modifier; or
based on the total mass of the heating film, the heating film comprises 70% to 80% by mass of the graphene, 20% to 30% by mass of the warming agent, and 1% to 10% by mass of the spectral modifier; or
based on the total mass of the heating film, the heating film comprises 70% to 80% by mass of the graphene, 0.05% to 5% by mass of the reinforcing agent, 20% to 30% by mass of the warming agent, and 1% to 10% by mass of the spectral modifier.

3. The heating film according to claim 1 or 2, having a maximum heating temperature ranging from 500°C to 1,700°C.

4. The heating film according to any one of claims 1 to 3, having an emission wavelength ranging from 3 µm to 15 µm.

5. The heating film according to any one of claims 1 to 4, having a thickness ranging from 20 µm to 1,000 µm.

6. The heating film according to any one of claims 1 to 5, comprising a plurality of heating units sequentially arranged in a length direction, wherein adjacent heating units are arranged at an interval from each other and connected through a connection segment.

7. The heating film according to claim 6, wherein each of the plurality of heating units has a hollowed-out hole.

8. The heating film according to claim 6 or 7, having a first heating segment and a second heating segment that are adjacent to each other in the length direction, wherein:
the first heating segment comprises multiple connected heating units , and the second heating segment comprises multiple adjacent heating units , wherein the multiple heating units corresponding to the first heating segment has a smaller size than the multiple heating units corresponding to the second heating segment; and/or
the first heating segment and the second heating segment are offset from each other in a width direction of the heating film.

9. The heating film according to any one of claims 6 to 8, having a plurality of notches arranged at an interval in the length direction.

10. The heating film according to claim 9, wherein each of the plurality of notches is defined through separating a part of the heating film from the remaining part of the heating film and then bending the part of the heating film.

11. A method for preparing the heating film according to any one of claims 1 to 10, the method comprising:
uniformly dispersing graphene oxide and an auxiliary agent in a solvent to obtain a dispersion, the auxiliary agent comprising at least one of a reinforcing agent, a warming agent, and a spectral modifier;
obtaining a graphene oxide film layer by coating the dispersion and drying;
sequentially performing a low temperature treatment, a carbonization treatment, and a graphitization treatment on the graphene oxide film layer to obtain a graphene film layer; and
performing calendering and cutting on the graphene film layer to obtain the heating film.

12. The method according to claim 11, wherein the dispersion has a solid content ranging from 1% to 10%.

13. The method according to claim 11 or 12, wherein the dispersion has a solid content ranging from 3% to 7%.

14. The method according to any one of claims 11 to 13, wherein:
a maximum temperature of the low temperature treatment ranges from 250°C to 400°C, and a holding time at the maximum temperature of the low temperature treatment ranges from 5 min to 3 h;
a maximum temperature of the carbonization treatment ranges from 900°C to 1,300°C, and a holding time at the maximum temperature of the carbonization treatment ranges from 5 min to 3 h; and
a temperature of the graphitization treatment ranges from 1,800°C to 3,150°C, and a holding time at the temperature of the graphitization treatment ranges from 5 min to 3 h.

15. The method according to any one of claims 11 to 14, wherein the graphene film layer has a carbon content greater than or equal to 99%.

16. A heating element, comprising a heating film according to any one of claims 1 to 10.

17. A heating appliance, comprising a heating element according to claim 16.

18. The heating appliance according to claim 17, wherein the heating appliance is an electric oven, a microwave oven, a combi steam oven, an electric kettle, an electric blanket, an electric warm air blower, an electric heater, a bath heater, an electric ceramic cooktop, or a disinfection cabinet.
